# EUROPÄISCHE PATENTANMELDUNG

(11) **EP 2 835 241 A1**
(43) Veröffentlichungstag der Anmeldung: **11.02.2015**
(21) Anmeldenummer: 13003906.8
(22) Anmeldetag: 05.08.2013
(51) Int. Cl.: B29B 17/04, B29B 9/12

(54) **Verfahren zur Wiederverwertung metallhaltiger Laminate**

(71) Anmelder: Deutsche SiSi-Werke Betriebs GmbH, 69214 Eppelheim/Heidelberg (DE); HPX Polymers GmbH, 85244 Röhrmoos (DE)
(72) Erfinder: Schwartz, Erhard, 69168 Wiesloch (DE)
(74) Vertreter: Grünecker, Kinkeldey, Stockmair & Schwanhäusser

(57) **Zusammenfassung**

Die vorliegende Erfindung betrifft ein Verfahren zur Wiederverwertung metallhaltiger Laminate sowie die Verwendung der dabei erhaltenen Partikel als Metallpigment.

## Beschreibung

Die vorliegende Erfindung betrifft ein Verfahren zur Wiederverwertung metallhaltiger Laminate sowie die Verwendung derartiger Laminate als Metallpigment.

### Stand der Technik und Einleitung

Laminate werden in vielen Bereichen als Verpackungsmaterial verwendet. So werden beispielsweise Laminate mit Schichten aus Kunststoff, Papier oder Pappe, sowie Metall etc. zur Verpackung von Getränken und anderen Lebensmittel eingesetzt. Viele zur Verpackung von Lebensmitteln und Getränken eingesetzte Laminate weisen Schichten aus Metall auf, weit verbreitet ist insbesondere der Einsatz von Laminaten mit darin umfassten Metallfolien, wie beispielsweise Aluminiumfolien. Derartige Verpackungen werden auch bereits in einem großen Umfang nach Gebrauch wieder verwertet, wobei allerdings in den überwiegenden Fällen entweder thermische Wiederverwendung oder extrem aufwendige Wiederverwendungsverfahren zur Rückgewinnung von Rohmaterialien zum Einsatz kommen.

Der Nachteil der thermischen Wiederverwendung ist sicherlich, dass aufwendig hergestellte Materialien lediglich zur Energiegewinnung verbrannt und somit kein stoffliches Recycling stattfindet. Die bekannten Verfahren zur Wiedergewinnung der Rohstoffe sind häufig extrem kompliziert und arbeitsaufwendig. So ist es beispielsweise bei Getränkekartons notwendig die einzelnen Komponenten voneinander zu trennen, um dann die wieder gewonnenen Kunststoffe, das auf Papier basierende oder Pappe basierende Material und die Metallkomponente weiter zu verwenden. So wird beispielsweise im dualen System Deutschland ein relativ hoher Anteil an Getränkekartons verwertet. Überwiegend werden dabei allerdings lediglich die auf Papier/Pappe basierenden Anteile durch einen Waschprozess extrahiert und wiederverwendet, während die Kunststoffschichten und das damit verbundene Aluminium thermisch verwertet wird.

Es gibt auch eine Reihe an Verfahren zur stofflichen Wiederverwertung von Laminaten, die Metallschichten enthalten. So offenbart die EP 589672 A3 ein Verfahren sowie einen Apparat zur Trennung und Wiedergewinnung von Komponenten von Metallfilmen enthaltenden Laminaten. Auch in der EP 707933 A1 wird ein derartiges Verfahren beschrieben, mit welchem thermoplastische Kunststofflaminate, die eine Metallfolie enthalten, in die einzelnen Bestandteile aufgetrennt werden können. Derartige Verfahren sind allerdings sehr aufwendig und verbrauchen eine große Menge an Energie und anderen Ressourcen, da hier teilweise mit großen Mengen an Lösungsmitteln gearbeitet oder aber zur Aufweichung der thermoplastischen Kunststoffschichten ein großer Wärmeeintrag erforderlich ist.

Wünschenswert sind daher weitere Alternativen zur Wiederverwendung derartiger Laminate, insbesondere der Laminate mit Metallfolien und Kunststoffschichten, da diese Materialien zu wertvoll für eine bloße thermische Verwendung sind.

Die vorliegende Erfindung stellt sich daher die Aufgabe ein derartiges Verfahren anzugeben.

### Kurze Zusammenfassung der vorliegenden Erfindung

Die vorliegende Erfindung löst diese Aufgabe durch das Verfahren gemäß Anspruch 1 sowie die Verwendung nach Anspruch 10. Bevorzugte Ausführungsformen sind in den jeweiligen Unteransprüchen sowie in der nachfolgenden Beschreibung gegeben.

### Detaillierte Beschreibung der Erfindung

Die vorliegende Erfindung stellt ein Verfahren zur Wiederverwertung von metallhaltigen Laminaten, insbesondere von Laminaten die eine Metallfolie bzw. Metallschicht umfassen zur Verfügung. Dieses Verfahren ist im Prinzip anwendbar bei jeder Art an Laminaten, einschließlich von Laminaten mit Papier- bzw. Pappeanteilen. Diese müssen allerdings vor dem wesentlichen Schritt des hier beschriebenen Verfahrens entfernt werden, was beispielsweise durch bekannte Waschverfahren möglich ist. Bevorzugt wird das erfindungsgemäße Verfahren jedoch eingesetzt zur Wiederverwertung von Laminaten, die neben Kunststoffschichten, bevorzugt aus thermoplastischen Materialien, eine Metallschicht bzw. Metallfolie umfassen, wobei diese metallhaltigen Laminate keine Papierschicht und/oder Pappschicht etc. aufweisen.

Das erfindungsgemäße Verfahren ist **dadurch gekennzeichnet, dass** das einzusetzende metallhaltige Laminat, ggf. nach Behandlungsschritten zur Abtrennung von Papier/Pappe und/oder einer optionalen Reinigungsbehandlung, durch geeignete mechanische Behandlung auf eine Partikelgröße gebracht wird, so dass anschließend ein Einsatz der erhaltenen Partikel zur Färbung von Kunststoffen und/oder Farben (wie Lacke) möglich ist. Darüber hinaus können die erhaltenen Partikel für Spritzgussanwendungen oder für extrudierte Produkte verwendet werden. Durch das Vorliegen von Metallschichten/Metallfolien im einzusetzenden Laminat ergeben sich durch die erfindungsgemäße mechanische Zerkleinerung Partikel, die einen Restanteil an Metallkomponente/Metallfolie umfassen. Weiterhin weisen diese Partikel Kunststoffanteile auf, typischerweise als die Metallkomponente/Metallfolie einschließende außen liegende Schichten.

Diese Partikel werden in ihrer Farbe im Wesentlichen durch die Metallkomponente bestimmt, so dass beispielsweise bei aluminiumhaltigen Laminaten Partikel mit einer silbrig bis grauen Färbung resultieren. Derartige Partikel können unvermischt als Rezyklat eingesetzt werden oder sie eignen sich als färbende Zusätze für eine ganze Reihe an Anwendungen, in denen z.B. bislang Metallpigmente verwendet wurden, wie Farben, Lacke, Kunststoffbeschichtungen, Formteile aus Kunstoffen etc.

Werden die erfindungsgemäß wiederzuwertenden, metallhaltigen Laminatpartikel mit weiteren Kunststoffen zur Herstellung von Formteilen vermischt, so können die Partikel mit Polymer-Neuware compoundiert oder aber mit Polymer-Rezyklat compoundiert werden. Insbesondere bei der Verwendung von Polymer-Rezyklat erhält man so Kunststoffcompounds und anschließend Formteile, die im Wesentlichen aus wiederverwertetem Material bestehen. Die hierbei zu verwendeten Polymere können im Wesentlichen beliebig gewählt werden, da selbst bei einer Unverträglichkeit (Nicht-Mischbarkeit) des Polymermaterials mit den Laminatpartikeln im Wesentlichen stabile Mischungen erhalten werden können, wenn geeignete Additive verwendet werden, d.h. insbesondere Phasen- oder Haftvermittler. Geeignete Polymermaterialien sind im Rahmen der vorliegenden Erfindung thermoplastisch zu verarbeitende Materialien, wie Polyolefine, Polykondensate etc., wie Polyester, Polyamide, Polyurethane, Polycarbonate, Acrylate, Polyethylen, Polypropylen und Copolymere. Ebenfalls eingesetzt werden können thermoplastische Elastomere sowie Mischungen an Polymermaterialien. Überraschenderweise hat es sich gezeigt, dass die wiederzuverwendenden Laminatpartikel in einer großen Menge in ein Kunststoffcompoundmaterial eingemischt werden können, wobei selbst mit Laminatpartikelanteilen von 70 Gew. % oder mehr noch Mischungen erhalten werden können, die sowohl durch Extrusionsverarbeitung als auch durch Spritzgussverarbeitung zu Formteilen geformt werden können, ohne dass dabei besondere Vorkehrungen getroffen werden müssen. Auch höhere Beladungen mit Laminatpartikeln sind dabei möglich, wie 80 Gew. % oder mehr. In diesem Zusammenhang hat es sich gezeigt, dass die Laminatpartikel selbst in derart hohen Anteilen nicht zu einer Agglomeration neigen, d.h. auch bei derart hohen Anteilen an Laminatpartikeln kann eine im Wesentlichen gleichmäßige Durchmischung erreicht werden. Hier scheint die Tatsache vorteilhaft zu sein, dass die erfindungsgemäß wiederzuverwendenden Laminatpartikel als äußere Schichten Kunststoffschichten aufweisen. Dadurch kann verhindert werden, dass die Metallanteile sich zu Kügelchen bzw. Verklumpungen innerhalb der Kunststoffcompoundmischung zusammenlagern. Dies ist ein besonderer Vorteil des erfindungsgemäßen Verfahrens. Zwar werden die einzelnen metallhaltigen Partikel ggf. in Abhängigkeit von den Verarbeitungsbedingungen aus ihrer im Wesentlichen flächigen (zweidimensionalen) Form gebracht, die einzelnen Laminatpartikel können jedoch beibehalten werden. Dies sichert in spezifischen Anwendungen gewünschte optische Effekte, in anderen Anwendungen kann dadurch eine höhere Barrierewirkung, beispielsweise gegenüber Feuchtigkeits- oder Gaspermeation erreicht werden.

Die vorliegende Erfindung ermöglicht es also aus Abfallprodukten wertvolle neue Materialien zu gewinnen, die vorteilhafterweise in weiteren, neu herzustellenden Produkten eingesetzt werden können. Dadurch, dass das erfindungsgemäße Verfahren keine energieaufwendigen Trennschritte erfordert (bis auf die Abtrennung von Papier- bzw. Pappeanteilen, falls durch das Ausgangsmaterial erforderlich), ist das erfindungsgemäße Verfahren sehr energieeffizient und stellt auf eine einfache Art und Weise ein hochwertiges Produkt zur Verfügung.

Die erfindungsgemäß zu verwendenden metallhaltigen Laminate können aus unterschiedlichen Quellen stammen. Geeignet sind beispielsweise Produktionsabfälle, wie Stanzreste, die bei der Herstellung von Folienbeuteln anfallen. Ebenfalls ist es auch möglich hier metallhaltige Laminate einzusetzen, die beispielsweise auf Grund einer fehlerhaften Bedruckung oder anderer Fehler nicht zur Herstellung von Folienbeuteln geeignet sind. Verwendet werden können ebenfalls Folienbeutel, die aufgrund von Produktionsfehlern entweder nicht befüllt werden können oder aber bei der Befüllung Fehler zeigen, so dass die befüllten Folienbeutel nicht in den Verkauf gelangen können. Ebenfalls möglich ist der Einsatz von benutzten und der Wiederverwertung zugeführten laminathaltigen Produkte, wie beispielsweise entleerte Folienbeutel, die typischerweise dann einem Reinigungsverfahren unterworfen werden. Dieses Reinigungsverfahren kann vor oder nach einer mechanischen Zerkleinerung erfolgen, je nach dem an welcher Stelle im Verfahrensablauf der Reinigungsschritt am günstigsten durchzuführen ist.

Aufgrund der Tatsache, dass die durch das erfindungsgemäße Verfahren erhaltenen Partikel in die Metallschicht zwischen den Kunststoffschichten eingebettet sind, die üblicherweise thermoplastischen Kunststoffschichten aufweisen, ist eine gute Einarbeitung und ausgezeichnete Verbindung mit weiteren Kunststoffmaterialien, Lackrohstoffen etc. möglich. Beispielsweise können die erfindungsgemäß erhaltenen Partikel als Metallpigment in Kunststoffgegenständen eingesetzt werden. Die in den Partikel noch vorliegenden Restanteile an thermoplastischen Materialien sorgen dafür, dass die Metallanteile sicher mit den weiteren Anteilen an Kunststoffmaterial verbunden werden, da hier beispielsweise ein Anschmelzen erfolgen kann, so dass eine gute Einbettung erreicht wird. Beim Einsatz in Lacken oder Farben sorgen die noch vorliegenden Anteile an (thermoplastischen) Kunststoffen dafür, dass ebenfalls eine gute Verträglichkeit mit den weiteren Lackbestandteilen besteht.

Erfindungsgemäß ist also insbesondere der Einsatz des wieder zu verwendenden Laminatmaterials in Extrusionsanwendungen und Spritzgussanwendungen möglich. Dabei hat sich gezeigt, dass insbesondere bei Compoundierungen mit Standard polymeren, wie Polypropylen oder Polyethylen sehr hohe Gehalte an wieder zu verwendendem Material möglich sind, ohne dass ein nachteiliger Abfall der Produkteigenschaften bemerkt wird, so lassen sich insbesondere Gehalte an wieder zu verwendendem Material von 70 Gew.-% oder mehr (bezogen auf die Gesamtmischung), insbesondere 75% oder mehr, wie beispielsweise 80 Gew.-% oder mehr und insbesondere auch 90 Gew.-% oder mehr in Extrusionsabläufen und Spritzgussverfahren einsetzen. Ebenfalls möglich ist auch die Herstellung von Hohlkörpern, wie Flaschen, in Extrusionsblasanlagen sowie die Herstellung von dicken Folien bzw. dünnen Platten (durch entsprechende Extrusionsverarbeitungsschritte), die durch den Gehalt an Aluminium vorteilhaft zur Abschirmung gegenüber Strahlen aller Arten dienen können. Da es sich überraschenderweise gezeigt hat, dass die in derartigen Compounds eingesetzten aluminiumhaltigen Laminate sehr fein verteilen und ein ästhetisch äußerst ansprechenden Eindruck vermitteln, können ebenfalls ästhetisch hochwertige Produkte erzeugt werden, beispielsweise Spielzeuge, Blumentöpfe mit dekorativen Reliefs etc.

Ebenso wie beim Einsatz in Kunststoffformkörpern ermöglicht die erfindungsgemäße Verwendung der metallhaltigen Laminatpartikel auch beim Einsatz in Lacken und Farben die Erzeugung von ästhetisch ansprechenden optischen Effekten. Durch die Metallanteile können, in Abhängigkeit vom enthaltenen Metall, farbliche Effekte erzeugt werden, die den farblichen Bereich der üblichen Metalle abdecken können. Aluminiumhaltige Laminate können beispielsweise Färbungen von grau bis silbrig erzeugen. Dabei ist es beispielsweise möglich glänzende bzw. reflektierende Metallfärbungen zu erhalten, die einen optisch hochwertigen Eindruck vermitteln. Insoweit eignen sich die erfindungsgemäß wieder zu verwertenden metallhaltigen Laminate beispielsweise auch als Effektpigmente (Glanzpigmente etc.).

Die vorliegende Erfindung stellt also insgesamt ein überraschend einfaches aber äußerst effizientes System zur Wiederverwendung von Laminaten zur Verfügung.

Die für die Durchführung des erfindungemäßen Verfahrens notwendigen Verfahrensparameter und Vorrichtungen können beispielsweise wie folgt ausgewählt werden. Dem Fachmann sind in diesem Zusammenhang aber weitere Verfahrensausgestaltungen aufgrund seiner Kenntnisse möglich.

Die optionale Abtrennung von Papier/Pappe kann durch bekannte Waschbehandlungen erfolgen. Dabei wird üblicher Weise zunächst das Ausgangsmaterial zerkleinert und anschließend, ggf. unter Zusatz bekannter Additive, mit einer großen Menge an Wasser gerührt. Nach Aufschlämmung der Papier- bzw. Pappeanteile kann eine Abtrennung der verbleibenden Feststoffanteile erfolgen (Kunststoffschichten und Metallschichten). Die optionale Reinigungsbehandlung kann unter Einsatz von Wasser, ggf. versetzt mit Additiven, wie Seifen, oberflächenaktiven Substanzen etc. erfolgen. Die so gesäuberten metallhaltigen Laminate können dann weiter verwendet werden.

Wie bereits beschrieben, können die erfindungsgemäß wieder zu verwendenden Laminatpartikel mit weiterem Polymermaterial abgemischt, anschließend aufgeschmolzen und dann zu geeigneten Formkörpern weiter verarbeitet werden. Als Zwischenschritt ist dabei selbstverständlich die Herstellung von Pellets möglich, die dann einfach zum jeweiligen Hersteller der Kunststoffformkörper transportiert werden können. Das erfindungsgemäße Verfahren kann also derart ausgestaltet werden, dass entweder die Laminatpartikel erhalten werden, oder aber Pellets als Zwischenprodukte bzw. dann gleich die gewünschten Kunststoffformkörper. Für den Einsatz in Lacken oder Farben eignet sich insbesondere das direkt erhaltene Laminatpartikelmaterial, das dann entweder direkt oder aber beim jeweiligen Lack- bzw. Farbenhersteller mit den notwendigen weiteren Rohstoffen abgemischt werden kann.

Entsprechend der vorliegenden Erfindung werden die metallhaltigen Laminate einer mechanischen Zerkleinerung (die dann frei von Verunreinigungen sowie frei von Pappe/Papier sind) auf eine Partikelgröße, die den Einsatz als unvermischtes Rezyklat erlaubt, unterzogen. Diese Partikelgröße ist typischer Weise kleiner als 2 cm, wie von 1,5 - 0,2 cm, in manchen Ausführungsformen 1,5 - 1,0 cm, wie etwa 1,2 cm, in anderen Ausführungsformen von 1,0 bis 0,3 cm, wie etwa 0,4 cm.

Darüber hinaus ist für die vorliegende Erfindung eine weitere Zerkleinerung der metallhaltigen Laminate (die dann frei von Verunreinigungen sowie frei von Pappe/Papier sind) auf eine Partikelgröße möglich, die den Einsatz als Färbmittel (Metallpigment) erlaubt. Diese Partikelgröße ist typischer Weise kleiner als 1 mm, wie von 5 bis 500 µm, insbesondere 10 bis 400 µm, wie etwa 20 bis 300 µm. In bestimmten Anwendungsfeldern kann die Partikelgröße 10 bis 100 µm betragen.

Die hier definierten Partikelgrößen beziehen sich darauf, dass die angegebenen Laminatpartikel einer gewissen Partikelgröße durch ein Sieb mit einer korrespondierenden Maschenweite passen. Die erfindungsgemäß in Betracht gezogenen Laminatpartikel können unterschiedlichste Formen aufweisen; so können beispielsweise Stanzabfälle regelmäßige Formen, wie eine Kreisform aufweisen. Erfindungsgemäß zu verwendende Laminatpartikel können aber auch unregelmäßige Formen aufweisen, wie sie durch die mechanische Zerkleinerung von Laminaten und Stanzabfällen etc. in geeigneten Zerkleinerungsapparaten entstehen.

Diese mechanische Zerkleinerung kann durch bekannte Verfahren erfolgen, wie Shredder, Mahlvorrichtungen etc. Dabei sollte die mechanische Zerkleinerung bevorzugt so durchgeführt werden, dass die thermische Belastung des Laminats so gering wie möglich ist. Dadurch kann die Qualität der erhaltenen Partikel hoch gehalten werden. Nach der mechanischen Zerkleinerung können die erhaltenen Partikel noch weiteren Behandlungen unterworfen werden, wie zusätzlichen Reinigungsbehandlungen, oder Behandlungen zur Einstellung einer gewünschten Partikelgröße/Partikelgrößenverteilung. Beispiele derartiger Behandlungsschritte sind Sieb- oder andere Klassifizierungsverfahren, bei denen unerwünschte Feinpartikel abgetrennt und Partikelgrößenverteilungen gezielt eingestellt werden können.

Das endgültige Produkt des erfindungsgemäßen Verfahrens kann dann in üblicher Weise abgefüllt und verwendet werden.

## Patentansprüche

1. Verfahren zur Wiederverwertung von metallhaltigen Laminaten, insbesondere Lebensmittelverpackungen oder Getränkeverpackungen, **dadurch gekennzeichnet, dass** das Verfahren die folgenden Schritte umfasst:
einen optionalen Schritt zur Abtrennung von Papierschichten und/oder Pappschichten, so dass ein Laminat resultiert, umfassend lediglich Kunststoffschichten und Metallschichten; und/oder
einen optionalen Reinigungsschritt; und
eine mechanische Zerkleinerung des metallhaltigen Laminats auf eine Partikelgröße von weniger als 2 cm.

2. Verfahren nach Anspruch 1, **dadurch gekennzeichnet, dass** das metallhaltige Laminat auf eine Partikelgröße von 1,5 bis 1,0 cm oder von 1,0 bis 0,2 cm zerkleinert wird.

3. Verfahren nach Anspruch 1 oder 2, **dadurch gekennzeichnet, dass** das metallhaltige Laminat auf eine Partikelgröße von 5 bis 500 µm, vorzugsweise 10 bis 400 µm, insbesondere 10 bis 100 µm zerkleinert wird.

4. Verfahren nach einem der vorstehenden Ansprüche, **dadurch gekennzeichnet, dass** das metallhaltige Laminat ein eine Aluminiumfolie umfassendes Laminat ist.

5. Verfahren nach einem der vorstehenden Ansprüche, **dadurch gekennzeichnet, dass** das metallhaltige Laminat Produktionsabfälle umfasst, erzeugt bei der Herstellung von Folienbeuteln und/oder dass das einzusetzende metallhaltige Laminat aufgrund von Fehlern nicht zur Weiterverarbeitung geeignetes Laminat umfasst, und/oder dass das einzusetzende metallhaltige Laminat aus Folienbeuteln stammt und/oder dass das einzusetzende metallhaltige Laminat aus benutzten und der Wiederverwertung zugeführten laminathaltigen Produkten stammt.

6. Verfahren nach einem der vorstehenden Ansprüche, weiter umfassend einen Schritt der Vermischung der Laminatpartikel mit Polymermaterial.

7. Verfahren nach Anspruch 6, **dadurch gekennzeichnet, dass** die Laminatpartikel in einem Anteil von 50 Gew. % oder mehr in dem resultierenden Gemisch enthalten sind.

8. Verfahren nach einem der vorstehenden Ansprüche 6 oder 7, wobei das Polymermaterial Polymer-Rezyklat umfasst.

9. Verfahren nach einem der Ansprüche 6 bis 8, **dadurch gekennzeichnet, dass** die Mischung aus Laminatpartikel und Polymermaterial aufgeschmolzen und zu Kunststoffformkörpern weiterverarbeitet wird.

10. Verwendung der Partikel, erhalten nach einem der Ansprüche 1 bis 9 als Metallpigment.

11. Verwendung nach Anspruch 10, **dadurch gekennzeichnet, dass** die Verwendung in Lacken bzw. Farben erfolgt.

12. Verwendung nach Anspruch 10, **dadurch gekennzeichnet, dass** die Verwendung in Kunststoffformkörpern erfolgt.

13. Verwendung nach einem der vorstehenden Ansprüche 10 bis 12, **dadurch gekennzeichnet, dass** die Partikel einen Durchmesser von 5 bis 500 µm, vorzugsweise 10 bis 100 µm aufweisen.
